## Europäisches Patentamt

## European Patent Office

## Office européen des brevets

(19)

(11) **EP 0 668 320 B1**

(12) **EUROPÄISCHE PATENTSCHRIFT**

(45) Veröffentlichungstag und Bekanntmachung des Hinweises auf die Patenterteilung:
**10.09.1997  Patentblatt 1997/37**

(51) Int Cl.⁶: **C08L 55/02**

(21) Anmeldenummer: **95101418.2**

(22) Anmeldetag: **02.02.1995**

(54) **ABS-Polymer-Zusammensetzungen mit gleichmässiger matter Oberfläche**

ABS polymer compositions for obtaining even matt surfaces

Composition de polymère ABS permettant d'obtenir des surfaces uniformément mates

(84) Benannte Vertragsstaaten:
**DE ES FR IT NL**

(30) Priorität: **15.02.1994  DE 4404749**

(43) Veröffentlichungstag der Anmeldung:
**23.08.1995  Patentblatt 1995/34**

(73) Patentinhaber: **BAYER AG**
**51368 Leverkusen (DE)**

(72) Erfinder:
• **Leitz, Edgar, Dr.**
**D-41541 Dormagen (DE)**
• **Eichenauer, Herbert, Dr.**
**D-41539 Dormagen (DE)**

• **Piejko, Karl-Erwin, Dr.**
**D-51467 Bergisch Gladbach (DE)**
• **Wittmann, Dieter, Dr.**
**D-51375 Leverkusen (DE)**
• **Frohberg, Ekkehard, Dr.**
**D-50767 Köln (DE)**

(56) Entgegenhaltungen:
**US-A- 4 233 409**

• **DATABASE WPI Section Ch, Week 8402, Derwent Publications Ltd., London, GB; Class A13, AN 76-16062X 'ACRYLONITRILE-BUTADIENE-STYRENE TYPE POLYMER' & JP-A-51 006 248 (MITSUBISHI MONSANTO) 19. Januar 1976**

**Beschreibung**

Die Erfindung betrifft einfach herzustellende ABS-Polymerisate mit gleichmäßiger matter Oberfläche bei gleichzeitiger hoher Zähigkeit und guter Verarbeitbarkeit.

ABS-Polymerisate mit matter Oberfläche sind bekannt und z.B. in EP-A 139 271, EP-A 154 244, EP-A 154 804, EP-A 164 048, EP-A 196 041, EP-A 295 517, EP-A 306 103, EP-A 570 773 und DE-A 3 340 591 beschrieben.

Ein Nachteil dieser matten ABS-Systeme ist jedoch, daß bei der Spritzgußverarbeitung keine gleichmäßig matten Formteiloberflächen erhalten werden und die Polymerisate nur mittlere Zähigkeitswerte und in der Regel keine sonderlich guten thermoplastischen Fließfähigkeiten aufweisen. Außerdem muß das Mattierungsmittel in relativ hohen Konzentrationen eingesetzt werden oder die Mattierung erfolgt durch den Einbau von Monomeren mit funktionellen bzw. reaktiven Gruppen (z.B. saure oder basische Gruppierungen, Epoxygruppen), was eine relativ komplizierte Herstellung bedingt und wodurch Möglichkeiten zur Abmischung mit unmodifizierten ABS-Polymerisaten, z.B. beim Kunststoff-Recycling oder bei der Abmischung mit gegen Säuren oder Basen empfindlichen Polymeren (z.B. Polycarbonat) stark eingeschränkt werden.

Es bestand daher Bedarf an zu Formteilen mit matten Oberflächen führenden ABS-Polymerisaten, die nur aus den klassischen zur ABS-Herstellung eingesetzten Bausteinen zusammengesetzt sind.

Es wurde nun gefunden, daß solche ABS-Polymerisate aus ganz speziellen Einzelkomponenten erhalten werden können, wenn genau definierte Randbedingungen eingehalten werden.

Gegenstand der Erfindung sind ABS-Polymer-Zusammensetzungen bestehend aus:

A) 5 bis 80 Gew.-Teilen, vorzugsweise 10 bis 60 Gew.-Teilen und besonders bevorzugt 15 bis 55 Gew.-Teilen, mindestens eines durch Masse- oder Lösungspolymerisation hergestellten ABS-Polymeren mit einem mittleren Teilchendurchmesser der Kautschukteilchen von 800 bis 15 000 nm, vorzugsweise von 1 000 bis 10 000 nm und besonders bevorzugt von 1 200 bis 5 000 nm und einem Kautschukgehalt von 1 bis 20 Gew.-%, vorzugsweise von 5 bis 15 Gew.-% und besonders bevorzugt von 7,5 bis 12,5 Gew.-%,

B) 1 bis 50 Gew.-Teilen, vorzugsweise 5 bis 40 Gew.-Teilen und besonders bevorzugt 10 bis 35 Gew.-Teilen, mindestens eines durch Emulsionspolymerisation hergestellten ABS-Polymeren mit einem mittleren Teilchendurchmesser von 50 bis 500 nm, vorzugsweise von 100 bis 450 nm und besonders bevorzugt von 200 bis 400 nm, mit einem Kautschukgehalt von 20 bis 80 Gew.-%, vorzugsweise von 30 bis 70 Gew.-% und besonders bevorzugt von 35 bis 65 Gew.-%,

C) 0 bis 70 Gew.-Teilen, vorzugsweise 5 bis 60 Gew.-Teilen und besonders bevorzugt 10 bis 50 Gew.-Teilen, mindestens eines thermoplastischen Vinylharzes hergestellt durch radikalische Polymerisation von mindestens zwei Monomerkomponenten ausgewählt aus Styrol, $\alpha$-Methylstyrol, Methylmethacrylat, Acrylnitril, N-Phenylmaleinimid und

D) 0,5 bis 10 Gew.-Teilen, vorzugsweise 0,75 bis 7,5 Gew.-Teilen und besonders bevorzugt 1 bis 5 Gew.-Teilen, mindestens eines durch Emulsionspolymerisation hergestellten Polybutadiens mit einem mittleren Teilchendurchmesser $d_{50}$ in der Latexform von 80 bis 500 nm, vorzugsweise von 100 bis 450 nm und besonders bevorzugt von 120 bis 300 nm und einem Gelgehalt von 10 bis 95 Gew.-%, vorzugsweise von 20 bis 80 Gew.-% und besonders bevorzugt von 30 bis 60 Gew.-%.

Als Pfropfgrundlage für die ABS-Polymerisate A) und B) kommen praktisch alle Kautschuke mit Glasübergangstemperaturen $\leq 0°C$ in Frage. Beispiele sind Polybutadien, Polyisopren, Styrol-Butadien-Copolymerisate, Acrylnitril-Butadien-Copolymerisate, Acrylatkautschuke (gegebenenfalls mit Kern/Schalen-Struktur), EPM-Kautschuke (Ethylen/Propylen-Kautschuke) und EPDM-Kautschuke (Ethylen/-Propylen/Dien-Kautschuke, die als Dien ein nichtkonjugiertes Dien wie z.B. Hexadien-1,5 oder Norbornadien in kleinen Mengen enthalten). Bevorzugter Kautschuk zur Herstellung der ABS-Polymere A und B ist Polybutadien.

Als Pfropfmonomere für die ABS-Polymerisate A) und B) werden Kombinationen von mindestens zwei Monomeren ausgewählt aus Styrol, $\alpha$-Methylstyrol, Methylmethacrylat, Acrylnitril, N-Phenylmaleinimid eingesetzt, bevorzugt werden Styrol/-Acrylnitril-Gemische, $\alpha$-Methylstyrol/Acrylnitril-Gemische und Styrol/$\alpha$-Methylstyrol/Acrylnitril-Gemische.

Die erfindungsgemäß einzusetzende Komponente A ist bekannt; ihre Herstellung erfolgt durch Massepolymerisation oder Lösungspolymerisation und ist z.B. in US-A-4 012 462, US-A-4 362 850 oder EP-A 67 536 beschrieben.

Die ABS-Kautschukteilchen der Komponente A sind wenigstens teilweise vernetzt und müssen mittlere Teilchendurchmesser $d_{50}$ (bestimmt durch Ausmessung elektronenmikroskopischer Aufnahmen) von 800 bis 15 000 nm, vorzugsweise von 1 000 bis 10 000 nm und besonders bevorzugt von 1 200 bis 5 000 nm, aufweisen. Die Kautschukgehalte des ABS-Polymeren A liegen zwischen 1 und 20 Gew.-%, vorzugsweise zwischen 5 und 15 Gew.-% und besonders bevorzugt zwischen 7,5 und 12,5 Gew.-%

Das Gewichtsverhältnis an eingebautem Styrol und gegebenenfalls eingebautem $\alpha$-Methylstyrol zu sonstigen eingebauten Comonomeren liegt in Komponente A vorzugsweise bei 70:30 bis 80:20, besonders bevorzugt bei 75:25 bis 78:22.

Die erfindungsgemäß einzusetzende Komponente B ist bekannt; ihre Herstellung erfolgt durch radikalische Emulsionspolymerisation der obengenannten Monomeren in Gegenwart eines in Latexform vorliegenden Kautschuks und ist z.B. in EP-A 212 123 beschrieben.

Die Emulsions-ABS-Kautschukteilchen der Komponente B sind wenigstens teilweise vernetzt und müssen mittlere Teilchendurchmesser $d_{50}$ (bestimmt durch Ultrazentrifugenmessung, vgl. W. Scholtan, H. Lange in Kolloid-Z. u. Z. Polymere 250, S. 782-796 (1972)) von 50 bis 500 nm, vorzugsweise von 100 bis 450 nm und besonders bevorzugt von 200 bis 400 nm, besitzen.

Die Kautschukgehalte der Komponente B liegen zwischen 20 und 80 Gew.-%, vorzugsweise von 30 bis 70 Gew.-% und besonders bevorzugt von 35 bis 65 Gew.-%.

Das Gewichtsverhältnis an eingebautem Styrol und gegebenenfalls eingebautem $\alpha$-Methylstyrol zu sonstigen eingebauten Comonomeren liegt in Komponente B vorzugsweise bei 70:30 bis 80:20, besonders bevorzugt bei 71:29 bis 74:26.

Die erfindungsgemäß gegebenenfalls einzusetzende thermoplastische Vinylharz-Komponente C ist bekannt; ihre Herstellung erfolgt durch radikalische Polymerisation der obengenannten Monomeren, wobei die Synthese durch Emulsions-, Suspensions-, Lösungs- oder Massepolymerisation durchgeführt werden kann, bevorzugt sind die beiden letztgenannten Verfahren, vgl. z.B. DE-A 3 334 338 und EP-A 255 889. Die Molekulargewichte der Vinylharz-Komponente C sind in weiten Grenzen variierbar ($\overline{M}_w$ ca. 50 000 bis 150 000), bevorzugt sind Copolymerisate aus Styrol und Acrylnitril, aus $\alpha$-Methylstyrol und Acrylnitril sowie Terpolymerisate aus Styrol, $\alpha$-Methylstyrol und Acrylnitril.

Die erfindungsgemäß einzusetzende Polybutadienkomponente D ist bekannt, ihre Synthese erfolgt durch das Verfahren der Emulsionspolymerisation (vgl. z.B. H. Logemann in Houben-Weyl, Methoden der Organischen Chemie, Markomolekulare Stoffe, Teil 1, S. 674 (1961) und dort zitierte Literatur, Thieme Verlag Stuttgart), durch das die geforderten Teilchendurchmesser $d_{50}$ von 80 bis 500 nm, vorzugsweise von 100 bis 450 nm und besonders bevorzugt von 120 bis 300 nm (jeweils gemessen durch Ultrazentrifugenmessungen, vgl. oben) und die optimalen Gelgehalte von 10 bis 95 Gew.-%, vorzugsweise von 20 bis 80 Gew.-% und besonders bevorzugt von 30 bis 60 Gew.-% (jeweils bestimmt nach der Drahtkäfigmethode in Toluol, vgl. H. Logemann in Houben-Weyl, Methoden der Organischen Chemie, Makromolekulare Stoffe, Teil 1, S. 307 (1961), Thieme Verlag Stuttgart) einstellbar sind.

Die erfindungsgemäßen ABS-Polymer-Zusammensetzungen können erhalten werden, indem man ihre Bestandteile A, B, gegebenenfalls C und D miteinander bei höherer Temperatur, insbesondere bei T = 100°C bis 280°C, z.B. in Knetern, auf Walzenstühlen oder Schneckenmaschinen vermischt.

Den Zusammensetzungen können übliche Additive wie z.B. Antioxidantien, Alterungsschutzmittel, Gleitmittel, Flammschutzmittel, Füllstoffe, Pigmente, Antistatika in den üblichen Mengen zugesetzt werden.

Die erfindungsgemäßen Zusammensetzungen sind thermoplastische Formmassen mit guter Zähigkeit und guter thermoplastischer Fließfähigkeit, die bei Verarbeitung durch z.B. Extrusion, Kalandrierung und Spritzgießen zu Formteilen mit gleichmäßiger matter Oberfläche führen.

**Beispiele und Vergleichsbeispiele**

Eingesetzte Polymerisate

A: Masse-ABS-Polymerisat mit einem mittleren Teilchendurchmesser der Kautschukteilchen von ca. 1 300 nm und einem Kautschukgehalt von ca. 11 Gew.-% (Magnum 3504, DOW).

B: Emulsions-ABS-Polymerisat bestehend aus 55 Gew.-% Polybutadien mit einem mittleren Teilchendurchmesser ($d_{50}$) von 395 nm als Pfropfgrundlage, auf die 45 Gew.-% eines Styrol/Acrylnitril-Gemisches (Gew.-Verhältnis Styrol:Acrylnitril =72:28) aufgepfropft werden.

C: Styrol/Acrylnitril-Copolymerisat aus 72 Gew.-% Styrol und 28 Gew.-% Acrylnitril mit einem Molekulargewicht (Gewichtsmittel) $\overline{M}_w$ von ca. 80 000 und einer molekularen Uneinheitlichkeit $U = \overline{M}_w/\overline{M}_n$ $-1 \leq 2$ .

D1: Polybutadien (hergestellt durch Emulsionspolymerisation) mit einem mittleren Teilchendurchmesser ($d_{50}$) von 115 nm und einem Gelgehalt von 93 Gew.-%.

D2: Polybutadien (hergestellt durch Emulsionspolymerisation) mit einem mittleren Teilchendurchmesser ($d_{50}$) von 280 nm und einem Gelgehalt von 49 Gew.-%

D3: Polybutadien (hergestellt durch Emulsionspolymerisation) mit einem mittleren Teilchendurchmesser ($d_{50}$) von 272 nm und einem Gelgehalt von 55 Gew.-%.

Die Komponenten D1 bis D3 wurden nicht separat aufgearbeitet, sondern jeweils zusammen mit einem Teil der Komponenten B aufgearbeitet (Gew.-Verhältnis D:B = 30:70) und in dieser Form eingesetzt.

E: Hydrophobierte Kieselsäure.

Die in Tabelle 1 angegebenen Mengen der Komponenten A bis D wurden in einem Innenkneter bei 180°C bis 200°C zusammen mit 2 Teilen Pentaerythrittetrastearat vermischt und anschließend durch Spritzgießen zu Normstäben und einer Platte (zur Oberflächenbeurteilung) verarbeitet.

Die Kerbschlagzähigkeit $a_k$ wurde nach ISO 180/1A (Einheit: $kJ/m^2$), die thermoplastische Verarbeitbarkeit durch Messung des MVI-Wertes nach DIN 53 735U (Einheit $cm^3$/10 min) und der Oberflächenglanz nach DIN 67 530 an einer ebenen Platte bei einem Reflektionswinkel von 60° (Reflektometerwert) ermittelt.

Die-resultierenden Werte sind ebenfalls in Tabelle 1 zusammengestellt; daraus ist ersichtlich, daß nur die erfindungsgemäßen ABS-Polymer-Zusammensetzungen eine optimale Kombination aus guter Zähigkeit, guter Verarbeitbarkeit und sehr guter gleichmäßiger Mattigkeit der Formteiloberfläche aufweisen.

## Tabelle 1

Zusammensetzungen und Prüfdaten der hergestellten ABS-Polymer-Zusammensetzungen

| Bei-spiel | Zusammensetzungen | | | | | | | Prüfdaten | | |
| --- | --- | --- | --- | --- | --- | --- | --- | --- | --- | --- |
| | A Gew.-Teile | B Gew.-Teile | C Gew.-Teile | D1 Gew.-Teile | D2 Gew.-Teile | D3 Gew.-Teile | E Gew.-Teile | $a_k$ $(kJ/m^2)$ | MVI $(cm^3/10\ min)$ | Reflekto-meterwert |
| 1 | 20 | 33,5 | 44 | 2,5 | - | - | - | 21 | 11 | 24 |
| 2 | 50 | 17 | 30 | 3 | - | - | - | 29 | 9 | 11 |
| 3 | 50 | 17 | 30 | - | 3 | - | - | 28 | 10 | 4 |
| 4 | 50 | 17 | 30 | - | - | 3 | - | 30 | 9 | 5 |
| 5 | 35 | 27 | 35 | 3 | - | - | - | 26 | 10 | 13 |
| 6 (Vgl.) | 100 | - | - | - | - | - | - | 21 | 6,5 | 40 |
| 7 (Vgl.) | 20 | 36 | 44 | - | - | - | - | 22 | 13 | 42 |
| 8 (Vgl.) | - | 35 | 64 | - | - | - | 1 | 14 | 10 | 35 |

EP 0 668 320 B1

**Patentansprüche**

1. ABS-Polymer-Zusammensetzungen bestehend aus:

A) 5 bis 80 Gew.-Teilen mindestens eines durch Masse- oder Lösungspolymerisation hergestellten ABS-Polymeren mit einem mittleren Teilchendurchmesser der Kautschukteilchen von 800 bis 15 000 nm und einem Kautschukgehalt von 1 bis 20 Gew.-%.

B) 1 bis 50 Gew.-Teilen mindestens eines durch Emulsionspolymerisation hergestellten ABS-Polymeren mit einem mittleren Teilchen- - durchmesser von 50 bis 500 nm mit einem Kautschukgehalt von 20 bis 80 Gew.-%,

C) 0 bis 70 Gew.-Teilen mindestens eines thermoplastischen Vinylharzes hergestellt durch radikalische Polymerisation von mindestens zwei Monomerkomponenten ausgewählt aus Styrol, $\alpha$-Methylstyrol, Methylmethacrylat, Acrylnitril, N-Phenylmaleinimid und

D) 0,5 bis 10 Gew.-Teilen mindestens eines durch Emulsionspolymerisation hergestellten Polybutadiens mit einem mittleren Teilchendurchmesser $d_{50}$ in der Latexform von 80 bis 500 nm und einem Gelgehalt von 10 bis 95 Gew.-%.

2. ABS-Polymer-Zusammensetzungen gemäß Anspruch 1 bestehend aus:

A) 10 bis 60 Gew.-Teilen mindestens eines durch Masse- oder Lösungspolymerisation hergestellten ABS-Polymeren mit einem mittleren Teilchendurchmesser der Kautschukteilchen von 1 000 bis 10 000 nm und einem Kautschukgehalt von 5 bis 15 Gew.-%,

B) 5 bis 40 Gew.-Teilen mindestens eines durch Emulsionspolymerisation hergestellten ABS-Polymeren mit einem mittleren Teilchendurchmesser von 100 bis 450 nm mit einem Kautschukgehalt von 30 bis 70 Gew.-%,

C) 5 bis 60 Gew.-Teilen mindestens eines thermoplastischen Vinylharzes hergestellt durch radikalische Polymerisation von mindestens zwei Monomerkomponenten ausgewählt aus Styrol, $\alpha$-Methylstyrol, Methylmethacrylat, Acrylnitril, N-Phenylmaleinimid und

D) 0,75 bis 7,5 Gew.-Teilen mindestens eines durch Emulsionspolymerisation hergestellten Polybutadiens mit einem mittleren Teilchendurchmesser $d_{50}$ in der Latexform von 100 bis 450 nm und einem Gelgehalt von 20 bis 80 Gew.-%.

3. ABS-Polymer-Zusammensetzungen gemäss Anspruch 1 bestehend aus

A) 15 bis 55 Gew.-Teilen mindestens eines durch Masse- oder Lösungspolymerisation hergestellten ABS-Polymeren mit einem mittleren Teilchendurchmesser der Kautschukteilchen von 1 200 bis 5 000 nm und einem Kautschukgehalt von 7,5 bis 12,5 Gew.-%,

B) 10 bis 35 Gew.-Teilen mindestens eines durch Emulsionspolymerisation hergestellten ABS-Polymeren mit einem mittleren Teilchendurchmesser von 200 bis 400 nm mit einem Kautschukgehalt von 35 bis 65 Gew.-%,

C) 10 bis 50 Gew.-Teilen mindestens eines thermoplastischen Vinylharzes hergestellt durch radikalische Polymerisation von mindestens zwei Monomerkomponenten ausgewählt aus Styrol, $\alpha$-Methylstyrol, Methylmethacrylat, Acrylnitril, N-Phenylmaleinimid und

D) 1 bis 5 Gew.-Teilen mindestens eines durch Emulsionspolymerisation hergestellten Polybutadiens mit einem mittleren Teilchendurchmesser $d_{50}$ in der Latexform von 120 bis 300 nm und einem Gelgehalt von 30 bis 60 Gew.-%.

4. Verwendung der ABS-Polymer-Zusammensetzungen gemäß Ansprüchen 1 bis 3 zur Herstellung von Formkörpern.

## Claims

1. ABS polymer compositions consisting of:

   A) 5 to 80 parts by weight of at least one ABS polymer produced by bulk or solution polymerisation, with an average particle diameter of the rubber particles of 800 to 15,000 nm and a rubber content of 1 to 20 % by weight,

   B) 1 to 50 parts by weight of at least one ABS polymer produced by emulsion polymerisation, with an average particle diameter of 50 to 500 nm and with a rubber content of 20 to 80 % by weight,

   C) 0 to 70 parts by weight of at least one thermoplastic vinyl resin produced by the radical polymerisation of at least two monomer components selected from styrene, $\alpha$-methylstyrene, methyl methacrylate, acrylonitrile and N-phenylmaleinimide, and

   D) 0.5 to 10 parts by weight of at least one polybutadiene produced by emulsion polymerisation, with an average particle diameter $d_{50}$ in the latex form of 80 to 500 nm and a gel content of 10 to 95 % by weight.

2. ABS polymer compositions according to claim 1, consisting of:

   A) 10 to 60 parts by weight of at least one ABS polymer produced by bulk or solution polymerisation, with an average particle diameter of the rubber particles of 1000 to 10,000 nm and a rubber content of 5 to 15 % by weight,

   B) 5 to 40 parts by weight of at least one ABS polymer produced by emulsion polymerisation, with an average particle diameter of 100 to 450 nm and with a rubber content of 30 to 70 % by weight,

   C) 5 to 60 parts by weight of at least one thermoplastic vinyl resin produced by the radical polymerisation of at least two monomer components selected from styrene, $\alpha$-methylstyrene, methyl methacrylate, acrylonitrile and N-phenylmaleinimide, and

   D) 0.75 to 7.5 parts by weight of at least one polybutadiene produced by emulsion polymerisation, with an average particle diameter $d_{50}$ in the latex form of 100 to 450 nm and a gel content of 20 to 80 % by weight.

3. ABS polymer compositions according to claim 1, consisting of:

   A) 15 to 55 parts by weight of at least one ABS polymer produced by bulk or solution polymerisation, with an average particle diameter of the rubber particles of 1200 to 5000 nm and a rubber content of 7.5 to 12.5 % by weight,

   B) 10 to 35 parts by weight of at least one ABS polymer produced by emulsion polymerisation, with an average particle diameter of 200 to 400 nm and with a rubber content of 35 to 65 % by weight,

   C) 10 to 50 parts by weight of at least one thermoplastic vinyl resin produced by the radical polymerisation of at least two monomer components selected from styrene, $\alpha$-methylstyrene, methyl methacrylate, acrylonitrile and N-phenylmaleinimide, and

   D) 1 to 5 parts by weight of at least one polybutadiene produced by emulsion polymerisation, with an average particle diameter $d_{50}$ in the latex form of 120 to 300 nm and a gel content of 30 to 60 % by weight.

4. The use of the ABS polymer compositions according to claims 1 to 3 for the production of mouldings.

## Revendications

1. Compositions de polymères ABS consistant en :

   A) 5 à 80 parties en poids d'au moins un polymère ABS préparé par polymérisation en masse ou en solution, à un diamètre de particule moyen du caoutchouc allant de 800 à 15 000 nm et une teneur en caoutchouc de 1 à 20 % en poids,

B) 1 à 50 parties en poids d'au moins un polymère ABS préparé par polymérisation en émulsion, à un diamètre de particule moyen de 50 à 500 nm et une teneur en caoutchouc de 20 à 80 % en poids,

C) 0 à 70 parties en poids d'au moins une résine vinylique thermoplastique préparée par polymérisation radicalaire d'au moins deux composants monomères choisis parmi le styrène, l'α-méthylstyrène, le méthacrylate de méthyle, l'acrylonitrile, le N-phénylmaléimide et

D) 0,5 à 10 parties en poids d'au moins un polybutadiène préparé par polymérisation en émulsion, à un diamètre de particule moyen $d_{50}$, sous la forme de latex, de 80 à 500 nm et une teneur en gel de 10 à 95 % en poids.

2. Compositions de polymères ABS selon la revendication 1, consistant en :

A) 10 à 60 parties en poids d'au moins un polymère ABS préparé par polymérisation en masse ou en solution, à un diamètre de particule moyen du caoutchouc allant de 1 000 à 10 000 nm et une teneur en caoutchouc de 5 à 15 % en poids,

B) 5 à 40 parties en poids d'au moins un polymère ABS préparé par polymérisation en émulsion, à un diamètre de particule moyen de 100 à 450 nm et une teneur en caoutchouc de 30 à 70 % en poids ,

C) 5 à 60 parties en poids d'au moins une résine vinylique thermoplastique préparée par polymérisation radicalaire d'au moins deux composants monomères choisis parmi le styrène, l'α-méthylstyrène, le méthacrylate de méthyle, l'acrylonitrile, le N-phénylmaléimide et

D) 0,75 à 7,5 parties en poids d'au moins un polybutadiène préparé par polymérisation en émulsion, à un diamètre de particule moyen $d_{50}$, sous la forme de latex, de 100 à 450 nm et une teneur en gel de 20 à 80 % en poids.

3. Compositions de polymères ABS selon la revendication 1, consistant en

A) 15 à 55 parties en poids d'au moins un polymère ABS préparé par polymérisation en masse ou en solution, à un diamètre de particule moyen du caoutchouc allant de 1 200 à 5 000 nm et une teneur en caoutchouc de 7,5 à 12,5 % en poids,

B) 10 à 35 parties en poids d'au moins un polymère ABS préparé par polymérisation en émulsion, à un diamètre de particule moyen de 200 à 400 nm et une teneur en caoutchouc de 35 à 65 % en poids,

C) 10 à 50 parties en poids d'au moins une résine vinylique thermoplastique préparée par polymérisation radicalaire d'au moins deux composants monomères choisis parmi le styrène, l'α-méthylstyrène, le méthacrylate de méthyle, l'acrylonitrile, le N-phénylmaléimide et

D) 1 à 5 parties en poids d'au moins un polybutadiène préparé par polymérisation en émulsion, à un diamètre de particule moyen $d_{50}$, sous la forme de latex, de 120 à 300 nm et à une teneur en gel de 30 à 60 % en poids.

4. Utilisation des compositions de polymères ABS selon les revendications 1 à 3 pour la fabrication d'objets moulés.